# EUROPEAN PATENT SPECIFICATION

(11) **EP 1 545 935 B1**
(45) Date of publication and mention of the grant of the patent: **15.02.2006**
(21) Application number: 03750944.5
(22) Date of filing: 22.09.2003
(51) Int. Cl.: B60R 15/04, B60R 15/00, B60P 3/34

(54) **HYGIENE APPARATUS AND VEHICLE INCORPORATING THE SAME**
HYGIENEVORRICHTUNG UND DAMIT AUSGERÜSTETES FAHRZEUG
APPAREIL D'HYGIENE ET VEHICULE COMPRENANT LEDIT APPAREIL

(30) Priority: 02.10.2002 GB 0222767; 08.08.2003 GB 0318639
(43) Date of publication of application: 29.06.2005
(73) Proprietor: Shippen, James Michael, Bromsgrove, Worcestershire B60 1DF (GB)
(72) Inventor: Shippen, James Michael, Bromsgrove, Worcestershire B60 1DF (GB)
(74) Representative: Jackson, Derek Charles
(86) International application number: PCT/GB2003/004065
(87) International publication number: WO 2004/030993

(56) References cited:
- EP-A- 0 812 732
- DE-C- 19 815 880
- US-A- 4 785 483
- US-A- 4 909 268
- PATENT ABSTRACTS OF JAPAN vol. 2000, no. 09, 13 October 2000 (2000-10-13) & JP 2000 153741 A (KANTO AUTO WORKS LTD), 6 June 2000 (2000-06-06)

## Description

This invention relates to a hygiene apparatus suitable for use within a vehicle to enclose a portion of the space within the vehicle and minimise the movement of contaminants from the said enclosed space to the remainder of the space within the vehicle. The invention also relates to a vehicle incorporating such hygiene apparatus.

A hygiene apparatus according to the pre-amble of claim 1 is disclosed in JP-A-2000153741.

Modern vehicles, particularly cars, have many features which facilitate their use, for example satellite navigation, cruise control, radar parking.

However, cars lack sanitation facilities, such as a toilet, which many families, for example families with young children or elderly members, may require.

The problem with the provision of sanitation facilities within a vehicle is that there is a risk of contamination, particularly by air borne contaminants, of the space within the vehicle. The risk of contamination is particularly important if the space within the vehicle is also used, for example, to prepare food.

In the case of a car, for example, it is not feasible to provide a permanent separate enclosure to contain the sanitation facilities due to the space within the car the permanent enclosure would occupy.

There is a need, therefore, for a hygiene apparatus which can be temporarily deployed for use within a vehicle and which separates a potentially unclean area for use with sanitation facilities from the remainder of the space within the vehicle which is required to be maintained as clean.

It is therefore an object of the present invention to provide a hygiene apparatus and a vehicle incorporating such a hygiene apparatus which overcomes or minimises these problems.

According to one aspect of the present invention there is provided a hygiene apparatus adapted for use within the space within a vehicle comprising a collapsible flexible membrane substantially impermeable to air, the flexible membrane being adapted in use to enclose a portion of the space within the vehicle and to separate the said portion of space enclosed by the flexible membrane from a portion of the space within the vehicle provided outside the flexible membrane, wherein means is provided to maintain an air pressure difference between the portion of the space enclosed by the flexible membrane and the portion of the space within the vehicle but outside the flexible membrane.

According to another aspect of the present invention there is provided a vehicle provided with a hygiene apparatus as hereinbefore defined.

The flexible membrane may be of bag-form.

The air pressure within the portion of the space enclosed by the flexible membrane may be maintained above atmospheric pressure. Alternatively, the air pressure within the portion of the space enclosed by the flexible membrane may be maintained below atmospheric pressure.

The means to maintain an air pressure difference may be an air pumping device.

The air pumping device may be adapted to pump air from a region exterior of the vehicle into the portion of the space enclosed by the flexible membrane. Alternatively, the air pumping device may be adapted to pump air from the portion of the space within the vehicle but outside the flexible membrane into the portion of the space enclosed by the flexible membrane.

Additionally or alternatively, the air pumping device may be adapted to pump air from the portion of the space enclosed by the flexible membrane to a region exterior of the vehicle.

The flexible membrane may be provided with attachment means for securing, either directly or indirectly, to an inner surface of the vehicle. The attachment means may be selected from straps, hook and loop material, hook and eye fasteners, magnets and combinations thereof.

The flexible membrane may be provided with supporting members. The supporting members may be in the form of inflatable tubular members and/or may be in the form of collapsible supporting rods.

The flexible membrane may be opaque or may be translucent.

Where necessary, lighting means may be provided in the form of at least one panel selected from translucent and transparent material provided in the flexible membrane.

Additionally or alternatively, lighting means may be provided in the form of a light source, for example a battery-powered lamp, provided within the space enclosed by the flexible membrane.

The flexible membrane may comprise a plastics material of sheet or fibre form and/or natural fibres.

The flexible membrane may be provided with a resealable opening suitable for a user to enter and exit the space enclosed by the flexible membrane.

The apparatus may include a storage unit adapted to be located within the vehicle for containing the flexible membrane when the flexible membrane is not in use.

Sanitation apparatus, for example a toilet, may be provided in the space enclosed by the flexible membrane.

Means may be provided to prevent the transmission of undesirable noise from the space enclosed by the flexible membrane to a region outside the flexible membrane, for example an acoustically impermeable material forming the flexible membrane. Alternatively, a noise generator may be provided within the space enclosed by the flexible membrane to mask the undesirable noise.

Means may be provided to prevent the transmission of undesirable odours from the space enclosed by the flexible membrane to a region outside the flexible membrane. The means may comprise an odour absorber, for example a chemical scrubber. Alternatively, a desirable odour generator may be provided within the space enclosed by the flexible membrane to mask the undesirable odour.

Means may be provided to enable a user to rupture the flexible membrane in the event of an emergency to permit the user to exit the space enclosed by the flexible membrane. The means to rupture the flexible membrane may comprise an openable seam or a detachable panel provided in the flexible membrane.

For a better understanding of the present invention and to show more clearly how it may be carried into effect reference will now be made, by way of example, to the accompanying drawings in which:
Figure 1 is a cut-away end view of an embodiment of a hygiene apparatus according to the present invention arranged in a first configuration within a vehicle;
Figure 2 is a cut-away side view of the vehicle incorporating the hygiene apparatus shown in Figure 1;
Figure 3 is a cut-away top view of the vehicle incorporating the hygiene apparatus shown in Figure 1;
Figure 4 is a perspective view of an embodiment of a supporting member incorporated in a hygiene apparatus according to the present invention;
Figure 5 is a cut-away end view of the embodiment of the hygiene apparatus shown in Figure 1 arranged in a second configuration within the vehicle; and
Figure 6 is a cut-away end view of the embodiment of the hygiene apparatus shown in Figure 1 arranged in a third configuration within the vehicle.

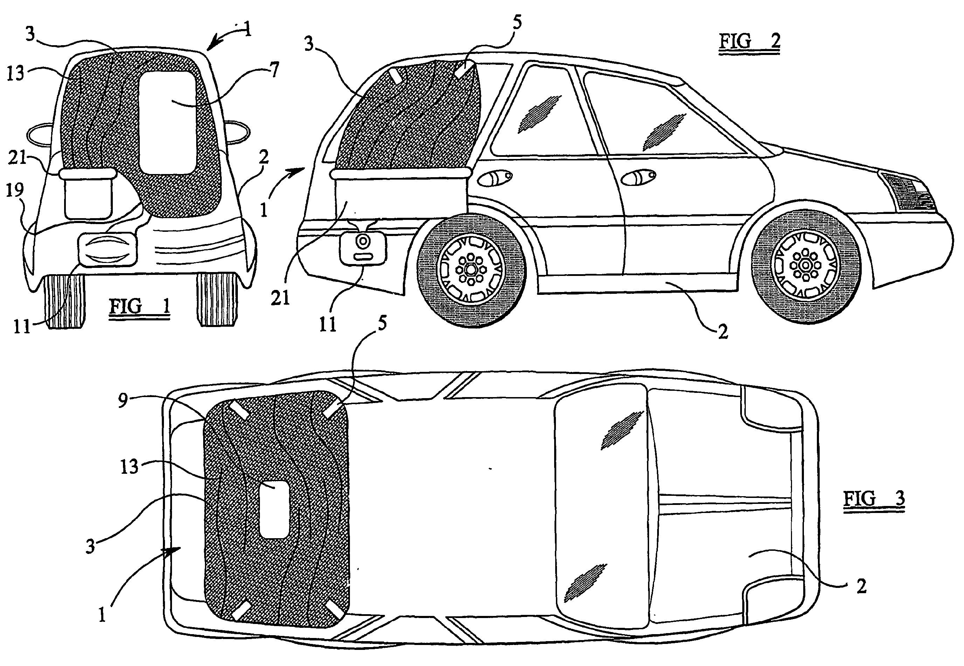

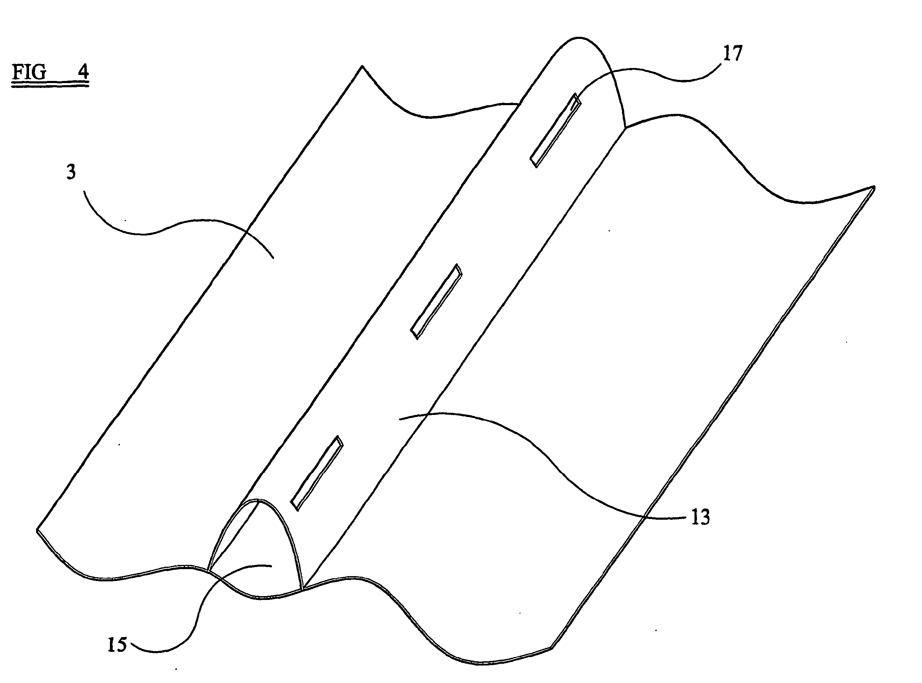

Figures 1, 2 and 3 show a hygiene apparatus 1 according to the present invention in a deployed configuration within the space within a vehicle 2. The apparatus 1 comprises a flexible membrane 3, for example comprising a plastics sheet or fibre material and/or natural fibres. The flexible membrane is substantially impermeable to air and bacterial penetration. The material of the flexible membrane has a density of 150 grams per metre squared.

The flexible membrane is of bag-form, the internal space within which can be varied depending on whether the flexible membrane is in the deployed configuration for use or a compacted configuration for storage. The flexible membrane is supported, when in the deployed configuration, by means of straps 5 attached directly to an inner surface of the vehicle. The flexible membrane forms a substantially sealed enclosure separating the space enclosed by the flexible membrane from the space inside the vehicle but outside the flexible membrane.

In the deployed configuration, the membrane encloses in the illustrated embodiment a substantially cuboid portion of the space within the vehicle of sufficient dimensions to enable a user to enter the space enclosed by the flexible membrane.

The shape of the deployed membrane is such that the majority of its external surface is in direct contact with, or in close proximity to, the internal surfaces of the vehicle and/or its fixtures. This allows the internal volume of the deployed membrane to be maximised and the tension in the membrane to be reduced, thereby relieving the forces in the attachment device between the vehicle and the membrane.

A resealable opening 7 provided in the flexible membrane 3 enables the user to enter and exit the space enclosed by the flexible membrane. The resealable opening is sufficiently large so as not to inhibit the user exiting the apparatus in an emergency, for example a fire.

The flexible membrane is opaque to provide privacy for the user within the space enclosed by the flexible membrane. At least one panel 9, for example of a translucent or transparent material, is provided such that sufficient light can enter the space enclosed by the flexible membrane from the region surrounding the flexible membrane to enable the user to be able to see whilst within the space enclosed by the flexible membrane. Alternatively or additionally, a lamp, for example powered by a battery, may be provided. As an alternative, the flexible membrane may be translucent.

A pump 11, attached by suitable tubing to the flexible membrane, is provided within the vehicle. The pump moves air from the exterior of the vehicle into the space enclosed by the flexible membrane.. The impedance to air flowing into the space enclosed by the flexible member is relatively low.

Attached to regions of an internal surface of the flexible membrane are supporting members 13 which provide regions of rigidity to support the flexible membrane when in the deployed configuration.

As shown in Figure 4 the supporting members are in the form of inflatable tubular channels 15 which can be inflated by the air pump 11 to a pressure in excess of the pressure within the flexible membrane. Apertures or pores 17 provided in the tubular channels 15 allow a controlled flow of air to exit the supporting members into the space enclosed by the flexible membrane.

Air within the space enclosed by the membrane can be vented to a region outside the vehicle by a resealable vent 19. The impedance of the resealable vent to air flowing out of the space within the membrane is higher than that of the tubing providing air into the membrane.

A storage unit 21 is provided within the vehicle into which the flexible membrane can be stored when in the compacted configuration.

A part, such as the base, of the flexible membrane may be sealed to the storage unit, typically the inside thereof, to ensure that the space enclosed by the flexible membrane is separated from the space within the vehicle but outside the flexible membrane.

Provided within the space contained by the flexible membrane is a toilet, for example a chemical toilet (not shown) which is secured to a suitable fixture of the vehicle within the storage unit. Other sanitation facilities (not shown), for example apparatus for changing an infant's nappy, may also be provided within the space contained by the flexible membrane.

The toilet and other sanitation facilities are retained within the space enclosed by the flexible membrane and stored in the storage unit 21.

An aperture is provided in the region of the flexible membrane adjacent to the toilet to enable the toilet to extend into the space within the flexible membrane but still be connected to the vehicle. The edges of the aperture are arranged around the body of the toilet and are attached to the inner surface of the storage unit by suitable fasteners, for example zip fasteners or press-studs. Sealing means is provided in the region of the fasteners to substantially prevent any escape of air from the space within the flexible membrane into the space within the vehicle but outside the membrane.

The fasteners are such that, if required, the flexible membrane can be detached from around the toilet and removed from the storage unit to be cleaned or disinfected, or to facilitate emptying of the toilet.

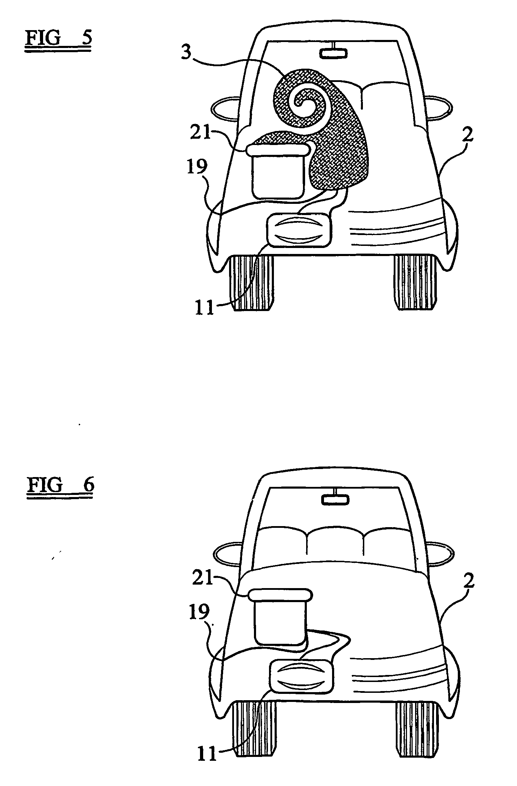

Figure 5 shows the flexible membrane in a partially compacted configuration prior to either being stored in the storage unit 21 or being deployed within the space within the vehicle.

Figure 6 shows the storage unit 21 provided within the vehicle, the flexible membrane in a compacted configuration being contained therein.

In use, the storage unit 21 is opened and the pump 11 is activated to pump air, via an aperture (not shown) in the base of the flexible membrane, from the exterior of the vehicle into the supporting members of the flexible membrane.

The tubular channels 15 of the supporting members 13 are inflated to an initial pressure in excess of the pressure of the space within the flexible membrane. Therefore, air from within the supporting members escapes at a controlled rate, via the apertures or pores 17, into the space within the flexible membrane. The escape of air via the apertures or pores causes the air pressure of the space within the flexible membrane to increase to a value higher than atmospheric. As such, the flexible membrane is inflated to fill a portion of the space within the vehicle.

The inflated flexible membrane forms a substantially sealed enclosure which separates the space within the interior of the vehicle enclosed by the flexible membrane from the remainder of the space within the interior of the vehicle outside the flexible membrane.

If required, air can be vented from within the flexible membrane to the outside of the vehicle via the resealable vent 19.

The pressure of the air within the supporting members and the space enclosed by the flexible membrane provides structural support to the flexible membrane when in the deployed configuration.

The inflated flexible membrane is secured by straps to the inner surface of the vehicle to maintain the flexible membrane in the deployed configuration in the event that the pressure within the flexible membrane is released, for example by the action of a user entering the space within the flexible membrane through the resealable opening.

Alternatively other securing means, for example hook and loop material (such as that sold under the Registered Trade Mark VELCRO), hook and eye fasteners or magnets can be used to maintain the flexible membrane in a deployed configuration.

The shape of the flexible membrane, when deployed, is such that complementary portions of the securing means on the outer surface of the flexible membrane and on the inner surface of the vehicle are substantially aligned to facilitate attachment between the complementary portions. Further, where provided, a transparent or translucent panel may be aligned with an interior light of the vehicle.

If the resealable opening is opened and then resealed the pressure of the air within the flexible membrane will rapidly decrease to atmospheric pressure. However, the pressure within the supporting members will not decrease as rapidly due to the controlled rate of air escape via the apertures and pores. As such, in addition to the straps, the inflated tubular channels of the supporting members provide rigidity to the flexible membrane and maintain the deployed configuration of the flexible membrane during a period in which the air pressure of the space within the flexible membrane is returned to a value higher than atmospheric.

The user enters the space enclosed by the flexible membrane through the opening from the exterior of the vehicle via a door of the vehicle. Once within the space contained by the flexible membrane the user reseals the opening and thus is provided with a private space within the interior of the vehicle in which the user can use the toilet and/or other sanitation facilities. The opening is held in a closed configuration by a suitable releasable fastener means, for example a zip or hook and eye fasteners.

As the flexible membrane encloses a substantially sealed space, any contaminants or odours produced by the use of the toilet are prevented from being transmitted to the space inside the vehicle that is outside the flexible membrane. The significant paths available by which contaminants can exit the space enclosed by the flexible membrane are via the pump, via the resealable vent, or through the resealable opening. All of these exit paths lead to the exterior of the vehicle.

When there is no longer a requirement for a separate space for use of the sanitation facilities, the straps supporting the flexible membrane are released and the air within flexible membrane is expelled to the exterior of the vehicle by opening the resealable opening. Alternatively the pump can be activated to pump air from within the flexible membrane to the exterior of the vehicle. Therefore, the flexible membrane assumes the compacted configuration for storage, as shown in Figures 5 and 6. The flexible membrane, containing any residual contaminants enclosed by the flexible membrane can then be placed into the storage unit until required again.

As the potentially unclean space enclosed by the flexible membrane at no time can come into contact with the clean space within the vehicle outside the flexible membrane, the flexible membrane separates and maintains a barrier between the clean and unclean spaces.

A hygiene apparatus in accordance with the present invention has been described hereinbefore as using a pump to supply air to tubular channels of supporting members which, in turn, controllably release air into the space enclosed by the flexible membrane. However, it should be appreciated that, for example in the absence of the supporting members, the pump could supply air directly into the space enclosed by the flexible membrane.

A hygiene apparatus in accordance with the present invention has been described hereinbefore as using a pump to move air from the exterior of the vehicle into the space enclosed by the flexible membrane. However, it should be appreciated that the pump could move air from the portion of the space within the vehicle but outside the flexible membrane into the space enclosed by the flexible membrane.

Although a hygiene apparatus in accordance with the present invention has been described hereinbefore as having the air pressure within the space enclosed by the flexible membrane at a value higher than atmospheric, it should be appreciated that the space enclosed by the flexible membrane could be maintained at a pressure lower than the pressure of the space within the vehicle but outside the flexible membrane.

The flexible membrane of a hygiene apparatus in accordance with the present invention has been described as being inflated by means of an air pump to deploy the flexible membrane for use. However, it should be appreciated that the flexible membrane can be simply unfolded from the storage unit and held either directly or indirectly, in a deployed configuration by means of supporting structures, such as straps, attached to the inside of the vehicle.

Collapsible supporting members attached to the flexible membrane could additionally or alternatively be used to provide rigidity to the flexible membrane in a hygiene apparatus in accordance with the present invention.

Such collapsible supporting members could comprise a number of relatively short lengths of rods which can be interconnected to form rigid members of sufficient length to support the flexible membrane. The interconnected lengths of rods could be disconnected from each other when the flexible membrane is not required and could, for example, be stored in the storage unit 21 along with the compacted flexible membrane.

As an alternative to, or in addition to, the securing means described hereinbefore, an air pump could be used to create a low pressure region between the top surface of the flexible membrane and the ceiling of the vehicle thus retaining the flexible membrane in a deployed configuration in close proximity to the upper inner surface of the vehicle.

Although the air pump is shown in the figures as being provided adjacent to the storage unit it should be appreciated that the air pump could be provided within the storage unit.

Although a hygiene apparatus in accordance with the present invention has been described as comprising a flexible membrane in the form of a single bag-form enclosure, it should be appreciated that the flexible membrane could comprise a number of parts which, when combined, form a flexible sealed enclosure capable of separating the space enclosed by the flexible membrane from the space within a vehicle but outside the membrane.

A hygiene apparatus in accordance with the present invention could also be provided with means to prevent the transmission of undesirable noise from the space enclosed by the flexible membrane, for example by utilising acoustically impervious materials as known to a person skilled in the art. Alternatively a source of additional noise, for example provided within the space enclosed by the membrane, could be used to mask undesirable noises from within the flexible membrane.

A chemical scrubber may be provided within the flexible membrane of a hygiene apparatus in accordance with the present invention to absorb undesirable odours. Alternatively a desirable odour generating source, for example provided in the space enclosed by the flexible membrane, may be used to mask the undesirable odours.

Although the flexible membrane has been described as having an aperture to fit around a toilet fixed within the storage unit, it should be appreciated that a flexible membrane could provided without the said aperture and the toilet could be provided unattached to the vehicle or storage unit but within the space within the flexible membrane.

A panel (not shown) may be provided in the flexible membrane which can be detached relatively easily from the remainder of the flexible membrane to rupture the flexible membrane in the event of an emergency. The panel would be of sufficient size to enable a user to rapidly exit the space enclosed by the flexible membrane in response to the emergency.

Alternatively, a seam (not shown) may be provided in the flexible membrane which can be ruptured relatively easily and opened to provide a sufficiently large aperture in the flexible membrane to enable a user to exit the space enclosed by the flexible membrane in response to an emergency.

## Claims

1. A hygiene apparatus (1) adapted for use within the space within a vehicle (2) comprising a collapsible flexible membrane (3) substantially impermeable to air, the flexible membrane (3) being adapted in use to enclose a portion of the space within the vehicle (2) and to separate the said portion of space enclosed by the flexible membrane (3) from a portion of the space within the vehicle provided outside the flexible membrane (3), **characterised in that** means (11) is provided to maintain an air pressure difference between the portion of the space enclosed by the flexible membrane (3) and the portion of the space within the vehicle but outside the flexible membrane (3).

2. A hygiene apparatus as claimed in claim 1, **characterised in that** the flexible membrane (3) is of bag-form

3. A hygiene apparatus as claimed in claim 1 or 2, **characterised in that** the air pressure within the portion of the space enclosed by the flexible membrane (3) is maintained above atmospheric pressure.

4. A hygiene apparatus as claimed in claim 1 or 2, **characterised in that** the air pressure within the portion of the space enclosed by the flexible membrane (3) is maintained below atmospheric pressure.

5. A hygiene apparatus as claimed in any preceding claim, **characterised in that** the means to maintain an air pressure difference is an air pumping device (11), for example selected from an air pumping device (11) adapted to pump air from a region exterior of the vehicle into the portion of the space enclosed by the flexible membrane (3) and an air pumping device (11) adapted to pump air from the portion of the space within the vehicle but outside the flexible membrane (3) into the portion of the space enclosed by the flexible membrane (3).

6. A hygiene apparatus as claimed in claim 5, **characterised in that** the air pumping device is adapted to pump air from the portion of the space enclosed by the flexible membrane (3) to a region exterior of the vehicle.

7. A hygiene apparatus as claimed in any preceding claim, **characterised in that** the flexible membrane (3) is provided with attachment means (5), for example selected from straps, hook and loop material, hook and eye fasteners, magnets and combinations thereof, for securing directly or indirectly to an inner surface of the vehicle.

8. A hygiene apparatus as claimed in any preceding claim, **characterised in that** the flexible membrane (3) is provided with supporting members (13), for example selected from supporting members (13) in the form of inflatable tubular members and supporting members (13) in the form of collapsible supporting rods.

9. A hygiene apparatus as claimed in any preceding claim, **characterised in that** the flexible membrane (3) is opaque or translucent.

10. A hygiene apparatus as claimed in any preceding claim, **characterised in that** lighting means (9), for example in the form of at least one panel (9) selected from translucent and transparent material, is provided in the flexible membrane (3).

11. A hygiene apparatus as claimed in any preceding claim, **characterised in that** lighting means is provided in the form of a light source, for example a battery-powered lamp, provided within the space enclosed by the flexible membrane (3).

12. A hygiene apparatus as claimed in any preceding claim, **characterised in that** the flexible membrane (3) comprises a plastics material of sheet or fibre form.

13. A hygiene apparatus as claimed in any preceding claim, **characterised in that** the flexible membrane (3) comprises natural fibres.

14. A hygiene apparatus as claimed in any preceding claim, **characterised in that** the flexible membrane (3) is provided with a resealable opening (7) suitable for a user to enter and exit the space enclosed by the flexible membrane (3).

15. A hygiene apparatus as claimed in any preceding claim, **characterised in that** the apparatus includes a storage unit (21) adapted to be located within the vehicle for containing the flexible membrane (3) when the flexible membrane (3) is not in use.

16. A hygiene apparatus as claimed in any preceding claim, **characterised in that** sanitation apparatus, for example a toilet, is provided in the space enclosed by the flexible membrane (3).

17. A hygiene apparatus as claimed in any preceding claim, **characterised in that** means, for example selected from an acoustically impermeable material forming the flexible membrane (3) and a noise generator provided within the space enclosed by the flexible membrane (3) to mask undesirable noise, is provided to prevent the transmission of undesirable noise from the space enclosed by the flexible membrane (3) to a region outside the flexible membrane (3).

18. A hygiene apparatus as claimed in any preceding claim, **characterised in that** means, for example an odour absorber, preferably a chemical scrubber odour absorber, is provided to prevent the transmission of undesirable odours from the space enclosed by the flexible membrane (3) to a region outside the flexible membrane (3).

19. A hygiene apparatus as claimed in claim 18, **characterised in that** the means to prevent the transmission of undesirable odours comprises a desirable odour generator provided within the space enclosed by the flexible membrane (3) to mask the undesirable odour.

20. A hygiene apparatus as claimed in any preceding claim, **characterised in that** means, for example selected from an openable seam provided in the flexible membrane and a detachable panel provided in the flexible membrane, is provided to enable a user to rupture the flexible membrane in the event of an emergency to permit the user to exit the space enclosed by the flexible membrane (3).

21. A vehicle incorporating a hygiene apparatus as claimed in any preceding claim.

## Patentansprüche

1. Ein Hygiene-Apparat (1) geeignet für die Verwendung im Innenraum eines Fahrzeugs (2) bestehend aus einer faltbaren flexiblen Membrane (3) im Wesentlichen luftundurchlässig, wobei die verwendete flexible Membrane (3) geeignet ist ein Teil des Fahrzeuginnenraums (2) zu umschließen und den genannten Teil der von der flexiblen Membrane (3) umschlossenen Fläche außerhalb der flexiblen Membrane (3) zu umschließen, charakterisiert insofern (11) dass eine Luftdruckdifferenz zwischen dem Teil der von der flexiblen Membrane (3) umschlossen wird und dem Teil des Raums innerhalb des Fahrzeugs, jedoch außerhalb der flexiblen Membrane (3), erhalten wird.

2. Gemäß Anspruch 1 wird Anspruch für einen Hygiene-Apparat erhoben, **gekennzeichnet durch** eine flexible Membrane (3) in Beutelform.

3. Gemäß Anspruch 1 oder 2 wird Anspruch auf einen Hygiene-Apparat erhoben, **dadurch gekennzeichnet, dass** der Luftdruck innerhalb des Teils, der von der flexiblen Membrane (3) umschlossen wird, oberhalb des Luftdrucks erhalten wird.

4. Gemäß Anspruch 1 oder 2 wird Anspruch auf einen Hygiene-Apparat erhoben, **dadurch gekennzeichnet, dass** der Luftdruck innerhalb des Teils, der von der flexiblen Membrane (3) umschlossen wird, unterhalb des Luftdrucks erhalten wird.

5. Anspruch für einen Hygiene-Apparat gemäß allen vorherigen Ansprüchen, **dadurch gekennzeichnet, dass** das Mittel zur Erhaltung einer Luftdruckschwankung eine Luftpumpenvorrichtung ist (11), zum Beispiel eine Auswahl aus einer Luftpumpenvorrichtung (11) angepasst an die Pumpenluft einer Region außerhalb des Fahrzeug in dem Teil des Raums der von der flexiblen Membrane umschlossen wird (3) und eine Luftpumpenvorrichtung (11) angepasst für das Pumpen von Luft von dem Teil innerhalb des Fahrzeugs, jedoch außerhalb der flexiblen Membrane (3) in den Teil des Raums, der von der flexiblen Membrane umschlossen wird (3).

6. Anspruch auf einen Hygiene-Apparat gemäß Anspruch 5 **dadurch gekennzeichnet, dass** die Luftpumpenvorrichtung geeignet ist die Luft von dem Teil des Raums, der von der flexiblen Membrane (3) umhüllt wird in einen Bereich außerhalb des Fahrzeugs zu pumpen.

7. Anspruch für einen Hygiene-Apparat gemäß allen vorherigen Ansprüchen, **dadurch gekennzeichnet, dass** die flexible Membrane (3) die mit Befestigungsmitteln ausgestattet ist (5), zum Beispiel aus einer Auswahl von Riemen, Haken und Schlaufenmaterial, Haken und Ösen, Magneten und Kombinationen aus diesen, zur sicheren direkten oder indirekten Befestigung an der Innenfläche des Fahrzeugs.

8. Anspruch für einen Hygiene-Apparat gemäß allen vorherigen Ansprüchen, **dadurch gekennzeichnet, dass** die flexible Membrane (3) mit Stützvorrichtungen (13) vorgesehen wird, zum Beispiel eine Auswahl aus Stützteilen (3) in Form aufblasbarer röhrenförmiger Bauteile und Stützbauteile (13) in Form faltbarer Stützstäbe.

9. Gemäß Anspruch 1 wird Anspruch für einen Hygiene-Apparat erhoben, **dadurch gekennzeichnet, dass** die flexible Membrane (3) lichtundurchlässig oder lichtdurchlässig ist.

10. Gemäß aller vorhergehenden Ansprüche wird Anspruch für einen Hygiene-Apparat erhoben, **dadurch gekennzeichnet, dass** die Beleuchtungsmittel (9), zum Beispiel in Form mindestens eines Elements (9), ausgewählt aus lichtdurchlässigem und transparentem Material in der flexiblen Membrane (3) vorhanden ist.

11. Gemäß aller vorhergehenden Ansprüche wird Anspruch für einen Hygiene-Apparat erhoben, **dadurch gekennzeichnet, dass** die Beleuchtungsmittel in Form einer Lichtquelle vorgesehen werden, zum Beispiel eine Lampe mit Batteriebetrieb, die in dem von der flexiblen Membrane (3) umschlossenen Raum vorhanden ist.

12. Gemäß aller vorhergehenden Ansprüche wird Anspruch für einen Hygiene-Apparat erhoben, **dadurch gekennzeichnet, dass** die flexible Membrane (3) ein Kunststoffmaterial in Blatt- oder Faserform enthält.

13. Gemäß aller vorhergehenden Ansprüche wird Anspruch für einen Hygiene-Apparat erhoben, **dadurch gekennzeichnet, dass** die flexible Membrane (3) aus Naturfasern besteht.

14. Gemäß aller vorhergehenden Ansprüche wird Anspruch für einen Hygiene-Apparat erhoben, **dadurch gekennzeichnet, dass** die flexible Membrane (3) mit einer wieder verschließbaren (7) Öffnung versehen ist, damit ein Benutzer in den von der flexiblen Membrane (3) umschlossenen Raum eindringen und diesen verlassen kann.

15. Gemäß aller vorhergehenden Ansprüche wird Anspruch für einen Hygiene-Apparat erhoben, **dadurch gekennzeichnet, dass** zu dem Apparat eine Lagereinheit (21) gehört, angebracht im Inneren des Fahrzeugs, in dem die flexible Membrane (3) untergebracht wird, sofern die flexible Membrane (3) nicht verwendet wird.

16. Gemäß aller vorhergehenden Ansprüche wird Anspruch für einen Hygiene-Apparat erhoben, **dadurch gekennzeichnet**, das die Hygienevorrichtung, zum Beispiel, eine Toilette in dem von der flexiblen Membrane (3) umgebenen Raum vorhanden ist.

17. Gemäß aller vorhergehenden Ansprüche wird Anspruch für einen Hygiene-Apparat erhoben, **dadurch gekennzeichnet, dass** zum Beispiel durch Vorhandensein eines akustisch undurchlässigen Materials, welches die flexible Membrane (3) formt und einem Rauschgenerator, der in dem Raum vorhanden ist, den die flexible Membrane (3) umschließt, die Übertragung unerwünschter Geräusche von dem Raum, den die flexible Membrane (3) umschließt in einen Bereich außerhalb der flexiblen Membrane (3) verhindert werden.

18. Gemäß aller vorhergehenden Ansprüche wird Anspruch für einen Hygiene-Apparat erhoben, **dadurch gekennzeichnet, dass** zum Beispiel ein Geruchsabsorber, vorzugsweise ein chemischer Waschgeruchsabsorber vorhanden ist, um die Übertragung unerwünschter Gerüche von dem von der flexiblen Membrane (3) umschlossenen Raum in einen Bereich außerhalb der flexiblen Membrane (3) zu leiten.

19. Gemäß aller vorhergehenden Ansprüche wird Anspruch für einen Hygiene-Apparat erhoben, **dadurch gekennzeichnet, dass** die Vermeidung der Übertragung unerwünschter Gerüche einen erstrebenswerten Geruchserzeuger innerhalb der von der flexiblen Membrane (3) umschlossenen Fläche umfasst, um unerwünschte Gerüche zu vermeiden.

20. Gemäß aller vorhergehenden Ansprüche wird Anspruch für einen Hygiene-Apparat erhoben, **dadurch gekennzeichnet, dass** zum Beispiel eine zu öffnende Naht in der flexiblen Membrane (3) und ein abnehmbares Element in der flexiblen Membrane (3) vorhanden sind, damit ein Benutzer die flexible Membrane (3) bei einem Notfall öffnen und den von der flexiblen Membrane (3) umschlossenen Raum verlassen kann.

21. Anspruch auf ein Fahrzeug mit einem Hygiene-Apparat gemäß allen vorhergehenden Ansprüche.

## Revendications

1. Un appareil d'hygiène (1) adapté pour être utilisé dans l'espace intérieur d'un véhicule (2) comprenant une membrane souple pliable (3) fortement imperméable à l'air, la membrane souple (3) étant adaptée lors de l'utilisation pour englober une partie de l'espace intérieur du véhicule (2) et pour séparer ladite partie de l'espace englobé par la membrane souple(3) de la partie de l'espace intérieur du véhicule se trouvant à l'extérieur de la membrane souple(3), et **caractérisé par le fait qu'**un moyen (11) est fourni pour maintenir une différence de pression d'air entre la partie de l'espace englobée par la membrane souple (3) et la partie de l'espace intérieur du véhicule se trouvant à l'extérieur de la membrane souple(3).

2. Un appareil d'hygiène tel que revendiqué dans la revendication 1, **caractérisé par le fait que** la membrane souple (3) est en forme de sac.

3. Un appareil d'hygiène tel que revendiqué dans les revendications 1 ou 2, **caractérisé par le fait que** la pression d'air dans la partie de l'espace englobée par la membrane souple (3) est maintenue au-dessus de la pression atmosphérique.

4. Un appareil d'hygiène tel que revendiqué dans les revendications 1 ou 2, **caractérisé par le fait que** la pression d'air dans la partie de l'espace englobée par la membrane souple (3) est maintenue au-dessous de la pression atmosphérique.

5. Un appareil d'hygiène tel que revendiqué dans l'une quelconque des revendications précédentes, **caractérisé par le fait que** le moyen de maintenir une différence de pression d'air est un dispositif de pompage d'air (11), choisi par exemple entre un dispositif de pompage d'air (11) adapté pour pomper l'air d'une zone extérieure au véhicule vers la partie de l'espace du véhicule englobée par la membrane souple (3) et un dispositif de pompage d'air (11) adapté pour pomper l'air de la partie de l'espace intérieur du véhicule mais extérieur à la membrane souple (3) vers la partie de l'espace englobée par la membrane souple (3).

6. Un appareil d'hygiène tel que revendiqué dans la revendication 5, **caractérisée par le fait que** le dispositif de pompage d'air est adapté pour pomper l'air de la partie de l'espace englobée par la membrane souple (3) vers une zone extérieure au véhicule.

7. Un appareil d'hygiène tel que revendiqué dans l'une quelconque des revendications précédentes, **caractérisé par le fait que** la membrane souple (3), est fournie avec un système d'attache (5), sélectionné par exemple parmi des courroies, des bandes velcro, des agrafes, des fermetures magnétiques, ou toute combinaison de ces systèmes d'attache, permettant de l'attacher directement ou indirectement à une surface de l'intérieur du véhicule.

8. Un appareil d'hygiène tel que revendiqué dans l'une quelconque des revendications précédentes, **caractérisé par le fait que** la membrane souple (3), est fournie avec des supports (13), sélectionnés par exemple parmi des supports (13) sous forme de tubes gonflables et des supports (13) sous forme de tringles pliantes.

9. Un appareil d'hygiène tel que revendiqué dans l'une quelconque des revendications précédentes, **caractérisé par le fait que** la membrane souple (3) est opaque ou translucide.

10. Un appareil d'hygiène tel que revendiqué dans l'une quelconque des revendications précédentes, **caractérisé par le fait qu'**un moyen d'éclairage (9), par exemple sous la forme d'au moins un panneau (9) sélectionné parmi des matériaux translucides et transparents, est fourni dans la membrane souple (3).

11. Un appareil d'hygiène tel que revendiqué dans l'une quelconque des revendications précédentes, **caractérisé par le fait qu'**un moyen d'éclairage est fourni sous forme de source lumineuse, par exemple une lampe à piles, fournie dans l'espace englobé par la membrane souple (3).

12. Un appareil d'hygiène tel que revendiqué dans l'une quelconque des revendications précédentes, **caractérisé par le fait que** la membrane souple (3) comprend un matériau plastique sous forme de feuilles ou de fibres.

13. Un appareil d'hygiène tel que revendiqué dans l'une quelconque des revendications précédentes, **caractérisé par le fait que** la membrane souple (3) est constituée de fibres naturelles.

14. Un appareil d'hygiène tel que revendiqué dans l'une quelconque des revendications précédentes, **caractérisé par le fait que** la membrane souple (3) est fournie avec une ouverture pouvant être refermée (7) adaptée à l'entrée et à la sortie d'un utilisateur dans l'espace englobé par la membrane souple (3).

15. Un appareil d'hygiène tel que revendiqué dans l'une quelconque des revendications précédentes, **caractérisé par le fait que** l'appareil comprend un élément de rangement (21) adapté pour être placé dans le véhicule et contenir la membrane souple (3) lorsque la membrane souple (3) n'est pas utilisée.

16. Un appareil d'hygiène tel que revendiqué dans l'une quelconque des revendications précédentes, **caractérisé par le fait qu'**un appareil sanitaire, par exemple des W.-C., est fourni dans l'espace englobé par la membrane souple (3).

17. Un appareil d'hygiène tel que revendiqué dans l'une quelconque des revendications précédentes, **caractérisé par le fait qu'**un moyen, choisi par exemple entre un matériau insonorisant formant la membrane souple (3) et un générateur de bruit situé à l'intérieur de l'espace englobé par la membrane souple (3) pour masquer tout bruit indésirable, est fourni pour empêcher la transmission de bruits indésirables de l'espace englobé par la membrane souple (3) vers la zone se trouvant à l'extérieur de la membrane souple (3).

18. Un appareil d'hygiène tel que revendiqué dans l'une quelconque des revendications précédentes, **caractérisé par le fait qu'**un moyen, par exemple un absorbeur d'odeurs, de préférence un absorbeur d'odeur de nature chimique, est fourni pour empêcher la transmission d'odeurs indésirables de l'espace englobé par la membrane souple (3) vers la zone se trouvant à l'extérieur de la membrane souple (3).

19. Un appareil d'hygiène tel que revendiqué dans la revendication 18, **caractérisé par le fait que** le moyen choisi pour empêcher la transmission d'odeurs indésirables comprend un générateur de parfum fourni dans l'espace englobé par la membrane souple (3) pour masquer les odeurs indésirables.

20. Un appareil d'hygiène tel que revendiqué dans l'une quelconque des revendications précédentes, **caractérisé par le fait qu'**un moyen, choisi par exemple entre une couture ouvrante fournie dans la membrane souple (3) et un panneau amovible fourni dans la membrane souple (3), est fourni pour permettre à l'utilisateur de rompre la membrane souple (3) en cas d'urgence afin de permettre à l'utilisateur de sortir de l'espace englobé par la membrane souple (3).

21. Un véhicule incorporant un appareil d'hygiène tel que revendiqué dans l'une quelconque des revendications précédentes.
